# EUROPÄISCHE PATENTANMELDUNG

(11) **EP 2 799 810 A1**
(43) Veröffentlichungstag der Anmeldung: **05.11.2014**
(21) Anmeldenummer: 13165992.2
(22) Anmeldetag: 30.04.2013
(51) Int. Cl.: G01B 11/25

(54) **Vorrichtung und Verfahren zum simultanen dreidimensionalen Vermessen von Oberflächen mit mehreren Wellenlängen**

(71) Anmelder: Aimess Services GmbH, 39288 Burg (DE)
(72) Erfinder: Wiedenmann, Ernst, 73431 Aalen (DE)
(74) Vertreter: Grünecker, Kinkeldey, Stockmair & Schwanhäusser

(57) **Zusammenfassung**

Die Erfindung betrifft eine Vorrichtung zum dreidimensionalen Vermessen eines Objekts und umfasst eine Projektionsanordnung zum Projizieren eines Musters auf eine Oberfläche mittels elektromagnetischer Strahlung, die wenigstens zwei verschiedene Wellenlängen oder wenigstens zwei verschiedene Wellenlängenbereiche aufweist; und eine Detektoranordnung zum Erfassen des projizierten Musters bei den wenigstens zwei verschiedenen Wellenlängen oder bei wenigstens zwei verschiedenen jeweiligen Wellenlängen aus den wenigstens zwei verschiedenen Wellenlängenbereichen. Die Erfindung betrifft weiterhin ein Verfahren zum dreidimensionalen Vermessen eines Objekts.

## Beschreibung

### Gebiet der Erfindung

Die Erfindung betrifft eine Vorrichtung und ein Verfahren zum dreidimensionalen Vermessen von Objekten mit einem topometrischen Messverfahren.

### Stand der Technik

Die dreidimensionale Erfassung von Objektoberflächen mittels optischer Triangulationssensoren nach dem Prinzip der Topometrie ist hinreichend bekannt. Hierbei werden zum Beispiel unterschiedliche Streifenmuster auf das zu vermessende Objekt projiziert, von einer oder mehreren Kameras beobachtet und anschließend rechnergestützt ausgewertet. Die Auswerteverfahren sind zum Beispiel Phasen-Shift-Verfahren (Phasenschiebeverfahren), der codierte Lichtansatz oder das Heterodynverfahren.

Ein Projektor beleuchtet das Messobjekt zeitlich sequentiell mit Mustern von parallelen hellen und dunklen Streifen gleicher oder unterschiedlicher Breite. Weiterhin werden Verfahren mit Zufallsmustern eingesetzt. In Abhängigkeit von der Form des Objekts und der Blickrichtung wird das projizierte Streifenmuster deformiert. Die Kamera bzw. die Kameras registrieren das projizierte Streifenmuster unter einem bekannten Blickwinkel zur Projektionsrichtung. Für jedes Projektionsmuster wird mit jeder Kamera ein Bild aufgenommen. Zur Auswertung der Messungen ist z.B. die Grenzlinie (die Kante) zwischen einem hellen und einem dunklen Streifen maßgeblich. Bei Zufallsmustern erfolgt die Auswertung anhand der projizierten Flächen, und beim Phasenschiebeverfahren wird die Intensitätsverteilung ausgewertet.

Um das gesamte Objekt zu vermessen wird das Muster über das Objekt bewegt (scannen). Für jeden Bildpunkt aller Kameras entsteht so eine zeitliche Folge von unterschiedlichen Helligkeitswerten. Zu einem gegebenen Objektpunkt sind die Bildkoordinaten im Kamerabild bekannt. Aus der Folge von Helligkeitswerten, die aus der Bildsequenz für jeden Kamerabildpunkt gemessen wurden, kann die Nummer des Streifens berechnet werden. Im einfachsten Fall erfolgt das über einen Binärkode (z.B. einen Gray-Code) der die Nummer des Streifens als diskrete Koordinate im Projektor kennzeichnet.

Eine höhere Genauigkeit ist mit dem sogenannten Phasenschiebeverfahren zu erreichen, da es eine nicht diskrete Koordinate bestimmen kann, wobei die Phasenlage eines modulierten Signals durch punktweise Intensitätsmessungen bestimmt wird. Die Phasenlage des Signals wird dabei mindestens zweimal um einen bekannten Wert verschoben, während an einem Punkt die Intensität gemessen wird. Aus drei oder mehr Messwerten kann die Phasenlage berechnet werden. Das Phasenschiebeverfahren kann entweder als Ergänzung eines Gray-Codes oder als absolut messendes Heterodynverfahren (mit mehreren Wellenlängen) eingesetzt werden.

Die Grundlagen und praktischen Anwendungen solcher topometrischer Messverfahren werden beispielsweise in Bernd Breuckmann: "Bildverarbeitung und optische Messtechnik in der industriellen Praxis", 1993, Franzis-Verlag GmbH, München ausführlich beschrieben.

Technisch relevante Gegenstände bestehen jedoch meistens aus verschiedenen Oberflächen. Die eingesetzten Messverfahren sollten die gesamte Oberfläche mit einer vergleichbaren Qualität erfassen. Je nach Wellenlänge und Verfahren gibt es Oberflächen, die kooperativ sind und Oberflächen, die nicht kooperativ sind, so dass demzufolge eine gleichmäßige Qualität für das gesamte Objekt nicht erzielt werden kann bzw. so dass eine Messunsicherheit besteht.

### Beschreibung der Erfindung

Angesichts der Nachteile des Stands der Technik, liegt der Erfindung das Problem zugrunde, die Nachteile zu überwinden. Mit der vorliegenden Erfindung wird ein Verfahren beschrieben und eine Vorrichtung dargestellt, die durch den Einsatz mehrerer Wellenlängen für die verschiedenen Oberflächen kooperative Bedingungen schafft.

Das genannte Problem wird gelöst durch die Vorrichtung nach Anspruch 1 und das Verfahren nach Anspruch 9.

Die erfindungsgemäße Vorrichtung zum dreidimensionalen Vermessen eines Objekts umfasst eine Projektionsanordnung zum Projizieren eines Musters auf eine Oberfläche mittels elektromagnetischer Strahlung, die wenigstens zwei verschiedene Wellenlängen oder wenigstens zwei verschiedene Wellenlängenbereiche aufweist; und eine Detektoranordnung zum Erfassen des projizierten Musters bei den wenigstens zwei verschiedenen Wellenlängen oder bei wenigstens zwei verschiedenen jeweiligen Wellenlängen aus den wenigstens zwei verschiedenen Wellenlängenbereichen. Beispielhaft für vorteilhaft einzusetzende Wellenlängenbereiche ist ultraviolettes (UV), sichtbares und/oder infrarotes (IR) Licht. Durch die gleichzeitige Verwendung von Licht mit wenigstens zwei verschiedenen Wellenlängen oder Wellenlängenbereichen können Materialien die beispielsweise für eine der verwendeten Wellenlängen nicht kooperativ sind, mit Hilfe der anderen Wellenlänge erfasst werden. Kooperativ bedeutet in diesem Zusammenhang, dass dass im Falle der Aufnahme des durch die Projektion auf die Oberfläche eingeprägten Wärmemuster ein wesentlicher Anteil der auftreffenden Strahlung absorbiert wird, um dann als Wärmestrahlung wieder abgestrahlt zu werden. Im Gegensatz dazu bedeutet kooperativ im Falle von Reflektionsmessungen, dass ein großer Anteil der auftreffenden Strahlung diffus reflektiert wird, ohne absorbiert zu werden. Weiterhin ergibt sich durch die Verwendung von wenigstens zwei verschiedenen Wellenlängen oder wenigstens zwei verschiedenen Wellenlängenbereichen eine gute Trennung der durch die Detektoranordnung zum simultanen Erfassen des projizierten Musters erfassten Strahlung nach Wellenlängen. Es können je nach Bedarf zwei, drei, vier oder fünf, oder sogar mehr als fünf verschiedene Wellenlängen oder Wellenlängenbereiche verwendet werden. Im Falle der gleichzeitige Verwendung von Licht mit wenigstens zwei verschiedenen Wellenlängenbereichen sind diese vorzugsweise nicht überlappend, also vollständig voneinander verschieden / separat, um eine vollständige Trennung der Oberflächeninformationen hinsichtlich der zwei verschiedenen Wellenlängen zu erzielen.

Gemäß einer Weiterbildung der erfindungsgemäßen Vorrichtung kann die Detektoranordnung zur simultanen oder zur sequentiellen Erfassung des projizierten Musters bei den wenigstens zwei verschiedenen Wellenlängen oder bei wenigstens zwei verschiedenen jeweiligen Wellenlängen aus den wenigstens zwei verschiedenen Wellenlängenbereichen ausgebildet sein.

Eine Weiterbildung der erfindungsgemäßen Vorrichtung oder dessen Weiterbildung besteht darin, dass die Projektionsanordnung wenigstens zwei Strahlungsquellen zur Erzeugung der Strahlung bei den wenigstens zwei verschiedenen Wellenlängen oder wenigstens zwei verschiedenen Wellenlängenbereichen umfassen kann, insbesondere wenigstens zwei Laser mit verschiedener Strahlungswellenlänge. Auf diese Weise kann die Strahlung mit der jeweiligen Wellenlänge unabhängig von der anderen erzeugt werden, so dass deren Position unabhängig festgelegt werden kann. Weiterhin müssen beispielsweise keine verlustbehafteten Farbfilter verwendet werden. Im Falle von Laser-Lichtquellen erhält man hohe Strahlungsintensitäten bei der jeweiligen Wellenlänge. Laser-Lichtquellen sind hier als vorteilhafte Beispiele für die Strahlungsquellen genannt. Es sind jedoch auch andere Lichtquellen wie z.B. LEDs, Deuterium-Entladungslampen, Hoch- und Höchstdruck-Gasentladungslampen einsetzbar.

Eine andere Weiterbildung besteht darin, dass die Projektionsanordnung einen Wellenlängenkombinierer und/oder eine Strahlführungsoptik und/oder Mittel zum Bewegen des projizierten Musters relativ zur Oberfläche umfassen kann. Mit einem Wellenlängenkombinierer kann ein Lichtstrahl erzeugt werden, der die Anteile der wenigstens zwei Strahlungsquellen enthält (mit zwei oder mehr Farben), der dann in der Strahlführungsoptik weitergeleitet werden kann. Der Lichtstrahl kann dann z.B. auf eine Maske mit dem zu projizierenden Muster (etwa ein Streifenmuster) gerichtet werden. Mit dem Mittel zum Bewegen des projizierten Musters relativ zur Oberfläche kann das Muster über das zu erfassende Objekt bzw. die Objektoberfläche bewegt werden (scannen), um verschiedene Bereiche der Oberfläche zu überstreichen.

Eine andere Weiterbildung besteht darin, dass die wenigstens zwei Strahlungsquellen jeweilige Stellelemente zum individuellen Einstellen der jeweiligen Strahlungsintensität aufweisen können. Mit dieser Weiterbildung können die Strahlungsintensitäten an die jeweiligen Materialgegebenheiten angepasst werden, um beispielsweise eine möglichst homogene Helligkeitsverteilung der von der Oberfläche zurück gestreuten Strahlung bei den verschiedenen Wellenlängen im Falle eines aus verschiedenen Materialien bestehenden Objekts zu erzielen.

Eine andere Weiterbildung besteht darin, dass die Detektoranordnung für jede Wellenlänge oder jeden Wellenlängenbereich eine Kamera oder eine Kameragruppe umfasst, und wobei im Falle einer Kameragruppe insbesondere jeweils unterschiedliche Erfassungsrichtungen in Bezug auf die Oberfläche vorgesehen sind. Auf diese Weise können die unterschiedlichen Wellenlängen unabhängig voneinander erfasst werden, wobei die Empfindlichkeit jeder Kamera auf die jeweilige Wellenlänge optimiert werden kann. Weiterhin kann durch den Einsatz von mehreren Kameras für eine bestimmte Wellenlänge die gleichzeitige Erfassung der Oberfläche bei mehreren Triangulationswinkeln erfolgen.

In einer Ausführung kann eine Kamera eingesetzt werden, die bei verschiedenen Wellenlängen sensitiv ist, also z.B. eine RGB-Kamera zusammen mit roten, grünen und blauen Lasern / Dioden als Stahlungsquellen.

Eine andere Weiterbildung besteht darin, dass die Wellenlängen oder Wellenlängenbereiche im ultravioletten, optischen und/oder infraroten Spektralbereich liegen. Durch die Ausdehnung der eingesetzten Wellenlängen auf den infraroten Bereich können z.B. auch Materialkombinationen, die Glas umfassen, durch das Triangulationsverfahren vermessen werden.

Eine andere Weiterbildung besteht darin, dass das jeweilige Muster ein Streifenmuster ist, das insbesondere durch eine entsprechende Maske aus lichtdurchlässigen und lichtundurchlässigen Abschnitten in der Projektionsanordnung erzeugt wird. Dieses stellt eine besonders einfach zu vermessende und auszuwertende Form des Musters dar. Alternativ dazu kann das Muster auch durch einen DLP Chip (Digital Light Processing) erzeugt werden.

Eine andere Weiterbildung besteht darin, dass die Vorrichtung weiterhin eine Auswerteeinrichtung zur Erzeugung von wellenlängenselektiven dreidimensionalen Oberflächendaten aus dem von der Detektoranordnung erfassten projizierten Muster nach dem Triangulationsverfahren und zum Zusammenführen der wellenlängenselektiven Daten; oder eine Auswerteeinrichtung zum Zusammenführen von wellenlängenselektiven Daten aus dem von der Detektoranordnung erfassten projizierten Muster und zur Erzeugung von dreidimensionalen Oberflächendaten nach dem Triangulationsverfahren umfassen kann. Je nach Alternative werden somit zuerst wellenlängenselektiv dreidimensionale Oberflächendaten erzeugt, die dann zusammengeführt werden oder umgekehrt, es werden zuerst die wellenlängenselektiven Daten zusammengeführt und dann dreidimensionale Oberflächendaten erzeugt.

Das oben genannte Problem wird weiterhin gelöst durch das erfindungsgemäße Verfahren zum dreidimensionalen Erfassen einer Oberfläche mit den Schritten: Projizieren eines Musters auf eine Oberfläche mittels elektromagnetischer Strahlung, die wenigstens zwei verschiedene Wellenlängen oder wenigstens zwei verschiedene Wellenlängenbereiche aufweist; und simultanes Erfassen des projizierten Musters bei den wenigstens zwei verschiedenen Wellenlängen oder bei wenigstens zwei verschiedenen jeweiligen Wellenlängen aus den wenigstens zwei verschiedenen Wellenlängenbereichen. Die Vorteile der erfindungsgemäßen Vorrichtung und deren Weiterbildungen gelten hier und bei den nachfolgenden Weiterbildungen entsprechend.

Eine Weiterbildung des erfindungsgemäßen Verfahrens besteht darin, dass der weitere Schritt des Projizierens des Musters mit wenigstens zwei Strahlungsquellen zur Erzeugung der Strahlung bei den wenigstens zwei verschiedenen Wellenlängen oder wenigstens zwei verschiedenen Wellenlängenbereichen, insbesondere mit wenigstens zwei Lasern mit verschiedener Strahlungswellenlänge ausgeführt werden kann. Wie bereits oben ausgeführt sind auch andere Strahlungsquellen vorteilhaft einsetzbar.

Eine andere Weiterbildung besteht darin, dass der weitere Schritt des Kombinierens der Strahlung mit verschiedenen Wellenlängen und/oder Führen der Strahlung und/oder Bewegen des projizierten Musters relativ zur Oberfläche ausgeführt wird.

Eine andere Weiterbildung besteht darin, dass das Verfahren den weiteren Schritt des individuelles Einstellens der jeweiligen Strahlungsintensität der wenigstens zwei Strahlungsquellen.

Eine andere Weiterbildung besteht darin, dass das jeweilige Muster ein Streifenmuster sein kann, das insbesondere durch eine entsprechende Maske aus lichtdurchlässigen und lichtundurchlässigen Abschnitten in der Projektionsanordnung erzeugt wird.

Eine andere Weiterbildung besteht darin, dass der weitere Schritt des Erzeugen von wellenlängenselektiven dreidimensionalen Oberflächendaten aus dem von der Detektoranordnung erfassten projizierten Muster nach dem Triangulationsverfahren und Zusammenführen der wellenlängenselektiven Daten; oder des Zusammenführens von wellenlängenselektiven Daten aus dem von der Detektoranordnung erfassten projizierten Muster und Erzeugen von dreidimensionalen Oberflächendaten nach dem Triangulationsverfahren durchgeführt werden kann.

Die verschiedenen Weiterbildungen lassen sich unabhängig voneinander einsetzen oder miteinander kombinieren.

Weitere bevorzugte Ausführungsformen der Erfindung werden im Nachfolgenden unter Bezugnahme auf die Zeichnungen beschrieben.

### Kurzbeschreibung der Zeichnungen

- Fig. 1: zeigt eine erste Ausführungsform der erfindungsgemäßen Vorrichtung.
- Fig. 2: zeigt eine zweite Ausführungsform der erfindungsgemäßen Vorrichtung.
- Fig. 3: veranschaulicht das erfindungsgemäße Verfahren im Zusammenhang mit der erfindungsgemäßen Vorrichtung.

### Beschreibung der Ausführungsformen

Mit der vorliegenden Erfindung wird ein Verfahren beschrieben und eine Vorrichtung dargestellt, die durch den Einsatz mehrerer Wellenlängen für die verschiedenen Oberflächen kooperative Bedingungen schafft. Die Erfindung betrifft ein Verfahren und eine Vorrichtung zur 3D Erfassung von Oberflächen mittels eines flächig messenden optischen Verfahrens. Dabei wird simultan eine strukturierte Beleuchtung mit mehreren Wellenlängen erzeugt und unter einem Triangulationswinkel wellenlängenselektiv nachgewiesen.

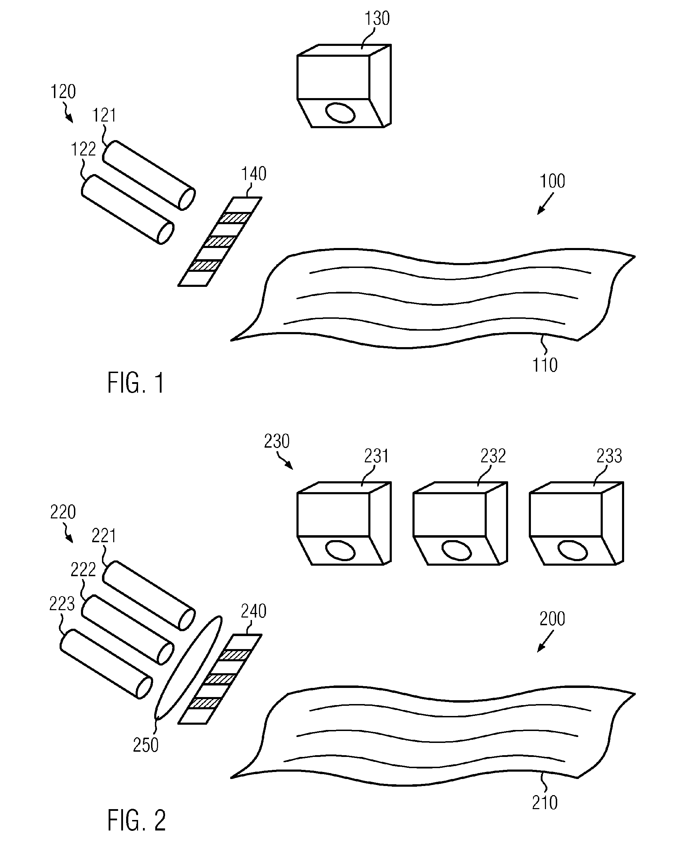

Die Figur 1 zeigt eine erste Ausführungsform der erfindungsgemäßen Vorrichtung.

Die Vorrichtung 100 zum dreidimensionalen Vermessen einer Oberfläche 110 umfasst eine Projektionsanordnung 120 zum Projizieren eines Musters 140 auf die Oberfläche 110 mittels elektromagnetischer Strahlung. Die Strahlung wird in dieser Ausführungsform beispielsweise durch zwei Lampen 121, 122 erzeugt, wobei die Lampe 121 Strahlung in einem ersten Wellenlängenbereich abstrahlt und die Lampe 122 Strahlung in einem zweiten Wellenlängenbereich abstrahlt. Der erste und der zweite Wellenlängenbereich sind voneinander verschieden. Vorzugsweise sind die Bereiche vollständig getrennt / separat. Weiterhin ist eine Detektoranordnung 130 zum simultanen Erfassen des projizierten Musters 140 bei zwei verschiedenen jeweiligen Wellenlängen aus den wenigstens zwei verschiedenen Wellenlängenbereichen vorgesehen.

Beispielsweise kann die erste Lampe 121 Licht im roten Spektralbereich aussenden und die zweite Lampe 122 Licht im blauen Spektralbereich. Die Lampen können etwa LEDs mit der entsprechenden Strahlungswellenlänge bzw. Strahlungswellenlängenbereich umfassen. Die Detektoranordnung 130 besteht in dieser Ausführungsform z.B. aus einer Digitalkamera mit einem Sensorchip der für die zwei verschiedenen Wellenlängen / Wellenlängenbereiche empfindlich ist. Beispielsweise kann der Sensorchip ein sogenannter Bayer-Sensor sein, der ein Bayer-Muster aufweist und somit insbesondere rotes und blaues Licht mit den jeweiligen farblich gefilterten Pixeln getrennt erfassen kann.

Fig. 2 zeigt eine zweite Ausführungsform der erfindungsgemäßen Vorrichtung zum dreidimensionalen Erfassen einer Oberfläche. Entsprechende Bezugszeichen in Fig. 1 und Fig. 2 bezeichnen gleiche Elemente, wobei lediglich die Hunderterzahl von 1 auf 2 erhöht ist.

Gegenüber der ersten Ausführungsform nach Fig. 1 weist die zweite Ausführungsform eine dritte Lichtquelle 223 auf, die Licht mit einer dritten Wellenlänge abstrahlt, die von der ersten und zweiten verschieden ist. Die Lichtquellen können hier z.B. Laser mit drei verschiedenen Strahlungswellenlängen sein. Die Vorrichtung umfasst hier weiterhin eine Strahlführungsoptik 250 die das Licht der verschiedenen Lichtquellen gesammelt auf das Muster 240 richtet Zudem sind in dieser Ausführungsform drei Kameras 231, 232, 233 vorgesehen, die jeweils für eine der drei abgestrahlten Wellenlängen empfindlich ist.

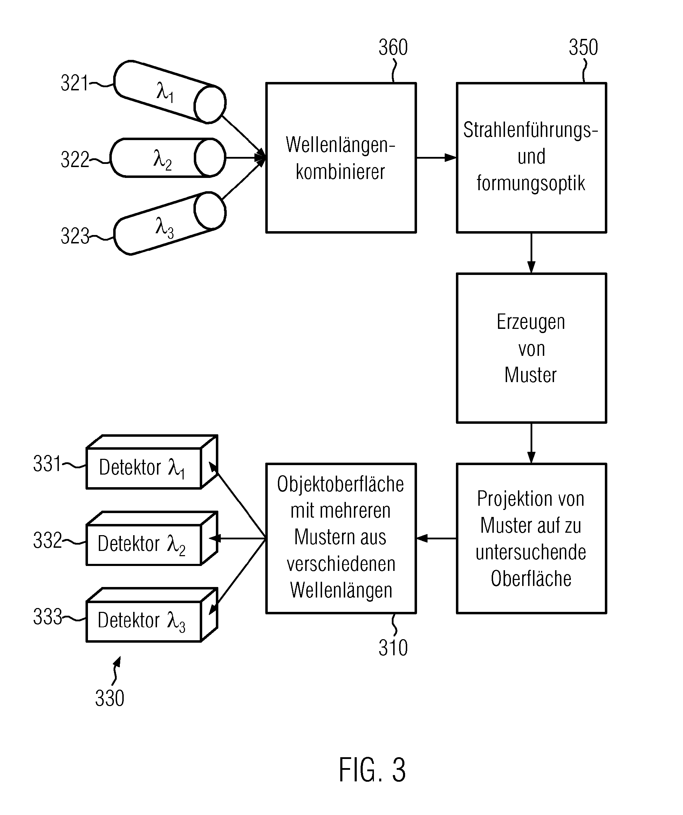

Fig. 3 veranschaulicht das erfindungsgemäße Verfahren im Zusammenhang mit der erfindungsgemäßen Vorrichtung. Entsprechende Bezugszeichen bezeichnen gleiche Elemente, wobei lediglich die Hunderterzahl auf 3 erhöht ist.

Die Strahlungsquellen 321, 322, 323 erzeugen Strahlung mit einer jeweils anderen Wellenlänge. Im Wellenlängenkombinierer 360 werden diese zu einem Strahlungsbündel zusammengeführt. Mit der Strahlführungs- und Strahlformungsoptik wird das Strahlungsbündel auf das zu projizierende Muster (bzw. die Maske, die das Muster aufweist) geführt. Dort wird das projizierte Muster mit den verschiedenen Wellenlängen erzeugt und auf die Oberfläche des zu erfassenden dreidimensionalen Objekts gelenkt. Das projizierte Muster aus verschiedenen Wellenlängen wird von der Oberfläche gestreut und mit den Detektoren 331, 332, 333 erfasst, die für die jeweilige Wellenlänge empfindlich sind. Mit den erfassten Daten wird dann ein Erzeugen von wellenlängenselektiven dreidimensionalen Oberflächendaten aus dem von der Detektoranordnung erfassten projizierten Muster nach dem Triangulationsverfahren und ein Zusammenführen der wellenlängenselektiven Daten durchgeführt.

Alternativ kann zunächst ein Zusammenführen von wellenlängenselektiven Daten aus dem von der Detektoranordnung erfassten projizierten Muster und dann ein Erzeugen von dreidimensionalen Oberflächendaten nach dem Triangulationsverfahren erfolgen.
Die Strahlführungsoptik kann insbesondere auch Mittel zum Bewegen des Musters über die Oberfläche umfassen, so dass ein Abscannen durchgeführt werden kann.

Zusammenfassend kann das gesamte System die folgenden Merkmale aufweisen. Der Detektor für eine jeweilige Wellenlänge kann eine Einzelkamera oder eine Kameragruppierung (zwei oder mehrere) sein. Die 3D Bestimmung erfolgt über Triangulation. Die Punkteermittlung findet in Bezug auf die verschiedenen Wellenlängen gleichzeitig (simultan) statt. Dadurch können die Nachteile der einzelnen Wellenlängen aufgehoben werden. Eine Systemkalibrierung wird ebenfalls simultan durchgeführt. Ein simultanes Scannen bewirkt identische Bedingungen und damit ein einfaches Fusionieren der Daten. Durch simultanes Erfassen ergeben sich deutliche Zeitvorteile. Ein automatisches Matching (registrieren) verschiedener Ansichten wird deutlich vereinfacht, da Merkmale bei unterschiedlichen Wellenlängen besser erkannt werden können. Falls das Muster über die Oberfläche bewegt wird, ist die Erfassung der Muster in Bezug auf die geänderten Projektionsbereiche natürlich zeitlich aufeinander folgend.

## Patentansprüche

1. Vorrichtung zum dreidimensionalen Erfassen einer Oberfläche, umfassend:
eine Projektionsanordnung zum Projizieren eines Musters auf eine Oberfläche mittels elektromagnetischer Strahlung, die wenigstens zwei verschiedene Wellenlängen oder wenigstens zwei verschiedene, vorzugsweise separate, Wellenlängenbereiche aufweist; und
eine Detektoranordnung zum Erfassen des projizierten Musters bei den wenigstens zwei verschiedenen Wellenlängen oder bei wenigstens zwei verschiedenen jeweiligen Wellenlängen aus den wenigstens zwei verschiedenen Wellenlängenbereichen.

2. Vorrichtung nach Anspruch 1, wobei die Projektionsanordnung wenigstens zwei Strahlungsquellen zur Erzeugung der Strahlung bei den wenigstens zwei verschiedenen Wellenlängen oder wenigstens zwei verschiedenen Wellenlängenbereichen umfasst, insbesondere wenigstens zwei Laser mit verschiedener Strahlungswellenlänge.

3. Vorrichtung nach Anspruch 1 oder 2, wobei die Projektionsanordnung einen Wellenlängenkombinierer und/oder eine Strahlführungsoptik und/oder Mittel zum Bewegen des projizierten Musters relativ zur Oberfläche umfasst.

4. Vorrichtung nach Anspruch 2 oder Anspruch 3 in Kombination mit Anspruch 2, wobei die wenigstens zwei Strahlungsquellen jeweilige Stellelemente zum individuellen Einstellen der jeweiligen Strahlungsintensität aufweisen.

5. Vorrichtung nach einem der voranstehenden Ansprüche, wobei die Detektoranordnung für jede Wellenlänge oder jeden Wellenlängenbereich eine Kamera oder eine Kameragruppe umfasst, und wobei im Falle einer Kameragruppe insbesondere jeweils unterschiedliche Erfassungsrichtungen in Bezug auf die Oberfläche vorgesehen sind.

6. Vorrichtung nach einem der voranstehenden Ansprüche, wobei die Wellenlängen oder Wellenlängenbereiche im ultravioletten, optischen und/oder infraroten Spektralbereich liegen.

7. Vorrichtung nach einem der voranstehenden Ansprüche, wobei das jeweilige Muster ein Streifenmuster ist, das insbesondere durch eine entsprechende Maske aus lichtdurchlässigen und lichtundurchlässigen Abschnitten in der Projektionsanordnung erzeugt wird.

8. Vorrichtung nach einem der voranstehenden Ansprüche, weiterhin umfassend:
eine Auswerteeinrichtung zur Erzeugung von wellenlängenselektiven dreidimensionalen Oberflächendaten aus dem von der Detektoranordnung erfassten projizierten Muster nach dem Triangulationsverfahren und zum Zusammenführen der wellenlängenselektiven Daten; oder
eine Auswerteeinrichtung zum Zusammenführen von wellenlängenselektiven Daten aus dem von der Detektoranordnung erfassten projizierten Muster und zur Erzeugung von dreidimensionalen Oberflächendaten nach dem Triangulationsverfahren.

9. Vorrichtung nach einem der voranstehenden Ansprüche, wobei die Detektoranordnung zur simultanen oder zur sequentiellen Erfassung des projizierten Musters bei den wenigstens zwei verschiedenen Wellenlängen oder bei wenigstens zwei verschiedenen jeweiligen Wellenlängen aus den wenigstens zwei verschiedenen Wellenlängenbereichen ausgebildet ist.

10. Verfahren zum dreidimensionalen Erfassen einer Oberfläche mit den Schritten:
Projizieren eines Musters auf eine Oberfläche mittels elektromagnetischer Strahlung, die wenigstens zwei verschiedene Wellenlängen oder wenigstens zwei verschiedene Wellenlängenbereiche aufweist;
simultanes Erfassen des projizierten Musters bei den wenigstens zwei verschiedenen Wellenlängen oder bei wenigstens zwei verschiedenen jeweiligen Wellenlängen aus den wenigstens zwei verschiedenen Wellenlängenbereichen.

11. Verfahren nach Anspruch 10, mit dem weiteren Schritt:
Projizieren des Musters mit wenigstens zwei Strahlungsquellen zur Erzeugung der Strahlung bei den wenigstens zwei verschiedenen Wellenlängen oder wenigstens zwei verschiedenen Wellenlängenbereichen, insbesondere mit wenigstens zwei Lasern mit verschiedener Strahlungswellenlänge.

12. Verfahren nach Anspruch 10 oder 11, mit dem weiteren Schritt:
Kombinieren der Strahlung mit verschiedenen Wellenlängen und/oder Führen der Strahlung und/oder Bewegen des projizierten Musters relativ zur Oberfläche.

13. Verfahren nach einem der Ansprüche 10 bis 12, mit dem weiteren Schritt:
individuelles Einstellen der jeweiligen Strahlungsintensität der wenigstens zwei Strahlungsquellen.

14. Verfahren nach einem der Ansprüche 10 bis 13, wobei das jeweilige Muster ein Streifenmuster ist, das insbesondere durch eine entsprechende Maske aus lichtdurchlässigen und lichtundurchlässigen Abschnitten in der Projektionsanordnung erzeugt wird.

15. Verfahren nach einem der Ansprüche 10 bis 14, mit dem weiteren Schritt:
Erzeugen von wellenlängenselektiven dreidimensionalen Oberflächendaten aus dem von der Detektoranordnung erfassten projizierten Muster nach dem Triangulationsverfahren und Zusammenführen der wellenlängenselektiven Daten; oder Zusammenführen von wellenlängenselektiven Daten aus dem von der Detektoranordnung erfassten projizierten Muster und Erzeugen von dreidimensionalen Oberflächendaten nach dem Triangulationsverfahren.
